# EUROPÄISCHE PATENTSCHRIFT

(11) **EP 2 980 441 B1**
(45) Veröffentlichungstag und Bekanntmachung des Hinweises auf die Patenterteilung: **26.06.2019**
(21) Anmeldenummer: 15175810.9
(22) Anmeldetag: 08.07.2015
(51) Int. Cl.: F16F 9/34, B61G 11/12, F16F 9/48, F16F 9/06, F16F 9/36, F16F 9/32

(54) **VORRICHTUNG ZUM ABDÄMPFEN VON DRUCKKRÄFTEN**
DEVICE FOR DAMPENING COMPRESSIVE FORCES
DISPOSITIF D'AMORTISSEMENT DE FORCES DE PRESSION

(30) Priorität: 01.08.2014 DE 102014110998
(43) Veröffentlichungstag der Anmeldung: 03.02.2016
(73) Patentinhaber: Voith Patent GmbH, 89522 Heidenheim (DE)
(72) Erfinder: Steinkampf, Andy, 38835 Osterwieck (DE); Kolshorn, Kay Uwe, 38304 Wolfenbüttel (DE); Mombour, Klaus, 47477 Moers (DE)
(74) Vertreter: Rupprecht, Kay

(56) Entgegenhaltungen:
- DE-A1- 19 523 467
- GB-A- 703 855

## Beschreibung

Die vorliegende Erfindung betrifft eine Vorrichtung zum Abdämpfen von Drucckräften in Form einer auch bei dynamischer Stoßbelastung reversibel ausgestalteten Stoßsicherung.

Aus der Schienenfahrzeugtechnik ist es bekannt, zwischen den einzelnen Wagenkästen eines mehrgliedrigen Fahrzeuges Stoßsicherungen, z.B. in Gestalt von sogenannten Stoßfängern, einzusetzen. Diese Bauelemente sind derart konstruiert, dass sie im Falle eines Zusammenstoßens mit einem festen oder einem beweglichen Hindernis, beispielsweise einem weiteren Wagenkasten, Energie aufnehmen und dadurch Beschädigungen am Fahrzeug oder der Ladung verhindern sollen. Derartige Stoßfänger finden vor allem an Schienenfahrzeugen Verwendung, wobei meistens ein oder zwei an den Stirnseiten angebrachte Konstruktionsteile eingesetzt werden, die den Zweck haben, die auf das Schienenfahrzeug in dessen Längsrichtung von außen einwirkenden waagerechten Druckkräfte aufzunehmen.

Hierbei kommen im Wesentlichen zwei Arten von Stoßfängern an Schienenfahrzeugen zum Einsatz. Sogenannte Zentralpuffer stellen eine Stoßsicherung dar, welche in der Längsachse des Fahrzeuges angeordnet ist, so dass sich an jeder Stirnseite des Schienenfahrzeuges nur ein Puffer in der Mitte der Kopfschwelle befindet. Weiterhin sind sogenannte Seitenpuffer bekannt, bei welchen sich jeweils zwei Puffer an der Stirnseite des Schienenfahrzeuges befinden.

Aus der Schienfahrzeugtechnik ist bekannt, beispielsweise bei einem mehrgliedrigen Schienenfahrzeug die einzelnen Wagenkästen mit Seitenpuffern ("UIC-Puffern") auszurüsten, wenn die Wagenkästen nicht über ein Drehgestell miteinander verbunden sind und somit im Fahrbetrieb der Abstand zweier miteinander gekoppelter Wagenkästen variieren kann. Derartige Seitenpuffer dienen dazu, die im normalen Fahrbetrieb beispielsweise beim Abbremsen auftretenden Stöße aufzunehmen und abzudämpfen.

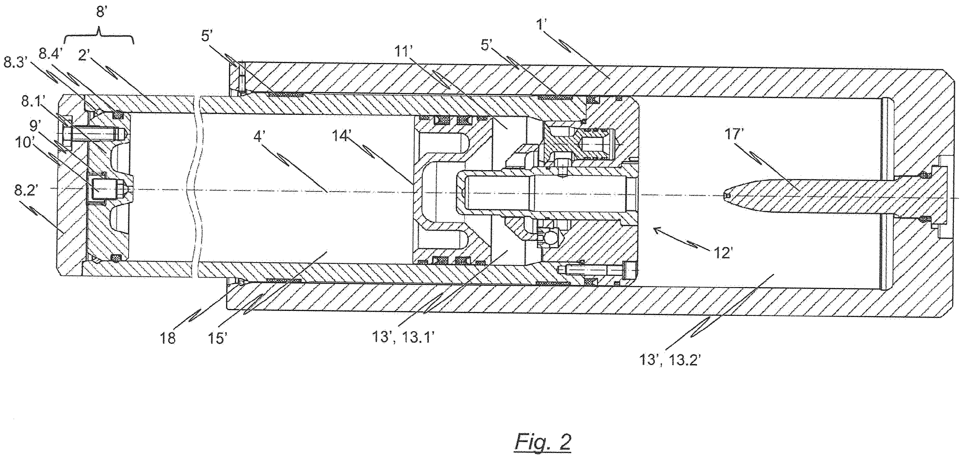

Um sowohl ein gutes Einfederverhalten des Puffers bei quasistatischem Einfedern als auch bei dynamischer Beanspruchung zu erreichen, ist es bekannt und in Fig. 2 gezeigt, sogenannte gashydraulische Dämpfungseinrichtungen einzusetzen, welche aus einer Kombination einer Gasdruckfeder mit einem hydraulischen Überströmsystem bestehen. Bei statischem bzw. quasistatischem Einfedern eines solchen herkömmlichen gashydraulischen Puffers wird Füllgas, in der Regel Stickstoff, innerhalb des Gasdruckfederteils des Puffers komprimiert und erzeugt so eine Gegenkraft auf den Pufferteller. Bei Nachlassen der von außen auf den Puffer einwirkenden Kraft bewirkt die Gasfeder somit durch anschließende Expansion des Füllgases den sogenannten Rückhub, also Wiederausfedern des Puffers.

Bei dynamischer Beanspruchung eines solchen herkömmlichen gashydraulischen Dämpfers sorgt zusätzlich durch einen Drosselspalt strömendes Hydrauliköl bzw. anderweitige Hydraulikflüssigkeit dafür, dass durch den während des Strömungsvorganges auftretenden Druckabfall über dem Drosselspalt eine einer dynamischen Kraftkurve folgende hydraulische Gegenkraft erzeugt wird, welche gegen die die Einfederung bewirkende Stoßkraft wirkt.

Bei derartigen gashydraulischen Dämpferkombinationen ist es wünschenswert, ein Überströmen der Hydraulikflüssigkeit über den Drosselspalt gegen den Druck der Gasfeder erst dann zu erlauben, wenn eine gewisse Mindestkraft beim Einfedern überschritten ist, um den Anteil der Gasfeder an der Gesamtfederung vor allem im statischen Belastungsfall nicht zu schmälern.

Es ist daher bekannt, sogenannte Multiplikatorventile vorzusehen, welche derart angeordnet sind, dass auf die größere Wirkfläche des Multiplikatorventils ("Multiplikatorfläche") direkt oder indirekt der in dem Gasraum der Gasdruckfeder herrschende Druck einwirkt und ein solches Multiplikatorventil durch diesen direkt oder indirekt wirkenden Gasdruck in seinen Ventilsitz gepresst wird. Die kleinere Wirkfläche des Multiplikatorventils, d.h. auf der entgegengesetzten Seite, steht dann in Wirkverbindung mit dem Hydraulikanteil des herkömmlichen gashydraulischen Dämpfers. Erst wenn - beispielsweise in Folge einer quasi statischen Einfederung des Puffers durch einen Stoß - der Druck in der Hydraulikflüssigkeit ein Vielfaches, beispielsweise das Fünffache des Gasdruckes beträgt, ist dieser hohe Druck im Stande, durch Einwirken auf die kleine Wirkfläche des Multiplikatorventils dieses soweit aus seinem Sitz zu verschieben, dass ein Durchlassspalt freigegeben wird, durch welchen die Hydraulikflüssigkeit beispielsweise in ein Hydraulikreservoir einströmen kann. Durch den Einsatz eines solchen Multiplikatorventils wird also insbesondere erreicht, dass der Gasdruck im Gasraum der Gasdruckfeder bei vollständig ausgefedertem Puffer relativ niedrig gehalten werden kann. Dadurch ist es möglich, eine günstige statische Kennlinie des Gasdruckfederanteils der gashydraulischen Dämpfungsvorrichtung zu erhalten.

Derart gashydraulische Dämpfer, wie sie z. B. auch in der Druckschrift EP 2 535 237 A1 im Detail beschrieben sind, weisen jedoch den Nachteil auf, dass die Bauteilgröße insbesondere eines äußeren Zylinders des Puffers und eines inneren Zylinders (Gasdruckfederteil) des Puffers jeweils dem notwendigen Hub aufgrund einer Energieaufnahme angepasst werden muss, die beim Einsatz des Puffers auftritt. Je nach Bedarf variiert nämlich der Hub bzw. die Energieaufnahme beim gashydraulischen Dämpfer (Puffer). Abhängig von der nötigen Energieaufnahmekapazität ist der benötigte Hub bzw. Arbeitshub des gashydraulischen Dämpfers unterschiedlich. Nimmt der Arbeitshub zu, müssen die Länge des inneren Zylinders und des äußeren Zylinders entsprechend vergrößert werden, weil der Arbeitshub vom inneren Zylinder, der im äußeren Zylinder verschiebbar ist, abhängt. Der Arbeitshub bezeichnet also die Wegstrecke, die der innere Zylinder im äußeren Zylinder zurücklegen kann und ist somit proportional zu z.B. einer Wegstrecke, die für eine pneumatische/hydraulische Dämpfung zur Verfügung steht. Weitere gashydraulische Dämpfer sind aus den Druckschriften GB 703 855 A und DE 195 23 467 A1 bekannt.

Demgemäß liegt der vorliegenden Erfindung die Aufgabe zugrunde, eine Vorrichtung zum Abdämpfen von Druckkräften der eingangs genannten Art dahingehend weiterzubilden, dass diese unter verschiedenen Bedingungen flexibel einsetzbar ist.

Im Hinblick auf die Vorrichtung wird die der Erfindung zugrunde liegende Aufgabe erfindungsgemäß durch den Gegenstand des unabhängigen Patentanspruchs 1 gelöst.

Vorteilhafte Weiterbildungen der erfindungsgemäßen Vorrichtung sind in den abhängigen Patentansprüchen angegeben.

Demnach wird insbesondere eine Vorrichtung zum Abdämpfen von Druckkräften, vorzugsweise zwischen einzelnen Wagenkästen eines mehrgliedrigen Fahrzeugs, z.B. spurgeführten Fahrzeugs, angegeben, die einen äußeren Zylinder und einen inneren Zylinder aufweist, der verschiebbar innerhalb des äußeren Zylinders angeordnet ist. Die Vorrichtung weist außerdem eine Buchse auf, die mit dem äußeren Zylinder verbindbar ist und derart ausgebildet ist, dass der innere Zylinder innerhalb eines Bereichs verschiebbar ist, der sich innerhalb der Buchse und des äußeren Zylinders befindet. Hierbei legt das Volumen, das vom inneren Zylinder, vom äußeren Zylinder und der Buchse umschlossen ist, einen Arbeitshub der Vorrichtung fest, der proportional zur maximalen Energieaufnahme der Vorrichtung ist, wobei das Volumen durch die Buchse variierbar ist.

Die erfindungsgemäßen Vorteile liegen auf der Hand. Bei bisherigen gashydraulischen Dämpfersystemen muss im Regelfall jeweils die Dimensionierung der wesentlichen Bauteile geändert werden, wenn der Dämpfer bzw. das Dämpfersystem andere Anforderungen erfüllen muss. Insbesondere muss der äußere und innere Zylinder eines bisherigen Dämpfersystems, wie in Fig. 2 gezeigt, angepasst werden, wenn an das Dämpfersystem andere Anforderungen, insbesondre bzgl. der Energieaufnahme, gestellt werden. Bei bisherigen Systemen müssen die Bauteile vergrößert bzw. verkleinert werden, wenn die auf das Dämpfersystem einwirkenden Belastungen, d.h. insbesondere die Energieaufnahme, größer bzw. kleiner werden. und hierdurch der benötigte Arbeitshub variiert.

Die erfindungsgemäße Vorrichtung weist diese Nachteile nicht auf, da die Buchse ausgelegt ist, am äußeren Zylinder befestigbar zu sein. Die Buchse kann somit leicht getauscht werden. Die Buchse definiert die genauen Ausmaße des Dämpfersystems dahingehend, dass das Volumen des Bereichs, der für die gashydraulische Dämpfung zuständig ist und der durch den Arbeitshub charakterisiert ist, von den Dimensionen der Buchse abhängt. Somit wird erreicht, dass, abhängig von an den Dämpfer gestellten Erfordernissen, eine geeignete Buchse an dem äußeren Zylinder befestigt wird und somit auf verschiedene Erfordernisse durch einfaches Austauschen der Buchse reagiert werden kann. Der äußere Zylinder bleibt somit immer der gleiche und fungiert daher als Basiszylinder. Auch der innere Zylinder muss nicht verändert werden. Lediglich die Buchse wird entsprechend den Erfordernissen ausgetauscht bzw. verändert.

Die Buchse übernimmt somit zumindest zum Teil die Aufgabe, die bei bisher bekannten Vorrichtungen der äußere Zylinder im Zusammenspiel mit dem inneren Zylinder erfüllt. Dies bedeutet insbesondere, wie bereits beschrieben, dass der Arbeitshub der Vorrichtung variabel eingestellt werden kann und hierzu lediglich die Buchse gewechselt werden muss und nicht die ganze Dämpfervorrichtung ausgewechselt werde muss.

Gemäß einem Aspekt der Erfindung ist die Buchse derart ausgebildet, dass sie die Verschieb-Bewegung des inneren Zylinders in Richtung einer Mitten-Längsachse der Vorrichtung führt.

Somit sorgt die Buchse für eine Führung des inneren Zylinders innerhalb des äußeren Zylinders. Diese Führungsfunktion kann somit auch an die Erfordernisse, die an die Vorrichtung angelegt sind, angepasst werden.

Gemäß einem weiteren Aspekt der Erfindung ist vorgesehen, dass an der Buchse mindestens eine Dichtung derart ausgebildet und angeordnet ist, dass Hydraulikflüssigkeit daran gehindert wird, zwischen dem inneren Zylinder und der Buchse hindurchzuströmen.

Bei bisher bekannten Dämpfern sind beispielhaft entsprechende Dichtungen im Bereich des äußeren Umfangs des inneren Zylinders angeordnet. Diese Dichtungen treten somit bei Betrieb des Dämpfers in Kontakt mit der Innenseite des äußeren Zylinders. Hierdurch ist im Regelfall notwendig, dass die innere Oberfläche des äußeren Zylinders von hoher Güte ist, um die Dichtungen keinem zu starken Verschleiß auszusetzen. Erfindungsgemäß muss die Innenseite des äußeren Zylinders nun nicht mehr von solch hoher Güte sein, da die Dichtungen an der Buchse angeordnet sind und in Kontakt mit der äußeren Oberfläche des inneren Zylinders treten. Somit muss nur die äußere Oberfläche des inneren Zylinders von hoher Güte sein. Hierbei ist zu beachten, dass die Bearbeitung der äußeren Oberfläche des inneren Zylinders wesentlich leichter ist als die Bearbeitung der inneren Oberfläche des äußeren Zylinders. Außerdem können die Dichtungen, die an der Buchse angeordnet sind, leichter ersetzt werden als Dichtungen, die, wie bei bekannten Dämpfern, am inneren Zylinder angeordnet sind, da die Buchse leicht von dem äußeren Zylinder getrennt werden kann und somit Wartungsarbeiten an der Buchse leicht durchgeführt werden können.

Gemäß einem weiteren Aspekt der Erfindung ist die Buchse derart an dem äußeren Zylinder befestigbar, dass im befestigten Zustand der Buchse mit dem äußeren Zylinder die Buchse als Sicherung des inneren Zylinders dient. Somit kann der inneren Zylinder dann nicht aus dem Bereich innerhalb der Buchse und des äußeren Zylinders hinausgeschoben werden.

Auch dies stellt im Vergleich zu bereits bekannten Dämpfern eine wesentliche strukturelle Vereinfachung dar, da bei solchen Dämpfern regelmäßig z. B. Drahtringe vorgesehen sind, um ein Herausgleiten des inneren Zylinders aus dem äußeren Zylinder zu verhindern. Die Buchse kann hingegen über einen Vorsprung, einen Schulterbereich o. ä. verfügen, um zu verhindern, dass der innere Zylinder aus dem äußeren Zylinder hinausgleitet, wobei hierbei im äußeren Umfangsbereich des inneren Zylinders eine entsprechende Struktur (z.B. auch ein Vorsprung o.ä.) ausgebildet ist. Die Ausbildung der Buchse, um eine derartige Sicherung zu gewährleisten, ist wesentlich einfacher, als beispielsweise einen extra Drahtring im Umfangsbereich des inneren Zylinders und in Kontakt mit dem äußeren Zylinder vorzusehen, um ein derartiges Herausgleiten zu verhindern.

Gemäß einem weiteren Aspekt der Erfindung ist vorgesehen, dass die Verbindung zwischen der Buchse und dem äußeren Zylinder über eine Schraubverbindung realisiert wird.

Eine derartige Schraubverbindung ermöglicht, die Buchse schnell und ohne größeren Aufwand von dem äußeren Zylinder zu trennen bzw. an diesen zu befestigen. Somit kann gewährleistet werden, dass, abhängig von den Erfordernissen, die an die Vorrichtung zum Abdämpfen von Druckkräften gestellt werden, eine geeignete Buchse mit dem äußeren Zylinder verbunden werden kann.

Gemäß einem weiteren Aspekt der Erfindung ist vorgesehen, dass die Buchse derart ausgebildet ist, dass durch die Buchse die Länge des innerhalb der Buchse und des äußeren Zylinders befindlichen Bereichs entlang der Mitten-Längsachse der Vorrichtung festgelegt wird.

Dieser Bereich ist genau der Bereich, entlang dem der innere Zylinder innerhalb der Buchse und des äußeren Zylinders verschiebbar ist. Dieser Bereich ist somit ausschlaggebend dafür, wie groß der Arbeitshub der Vorrichtung zum Abdämpfen von Druckkräften ist. Der Arbeitshub wiederum steht in Relation zur Energieaufnahme, für die der gashydraulische Dämpfer bzw. die Vorrichtung ausgelegt ist. Somit kann durch die Buchse der Arbeitshub und damit die mögliche Energieaufnahme der Vorrichtung zum Abgrenzen von Druckkräften bzw. des gashydraulischen Dämpfers festgelegt werden. In anderen Worten kann in Antwort auf verschiedene Erfordernisse an die Vorrichtung eine geeignete Buchse mit dem äußeren Zylinder verbunden werden und somit der Bereich innerhalb der Buchse und des äußeren Zylinders, in dem der innere Zylinder verschiebbar ist, angepasst werden.

Gemäß einem weiteren Aspekt der Erfindung weist der innere Zylinder einen hinteren Endbereich auf, der einstückig ausgebildet ist und lediglich durch eine Gewindebohrung für ein Gasventil durchbrochen ist. Über eine derartige Gewindebohrung kann ein Gasventil an dem hinteren Endbereich des inneren Zylinders angebracht werden, über welches Gas in das innere des inneren Zylinders geleitet werden kann, um somit die pneumatische Dämpferfunktion der Vorrichtung sicherzustellen. Erfindungsgemäß ist der hintere Endbereich ansonsten geschlossen. Somit entfallen verschiedene Bauteile wie beispielsweise Endstopfen, Prallplatte, Drahtring und Dichtungselemente wie sie beispielsweise bei bereits bekannten Dämpfern notwendig sind. Derartige Elemente sind beispielsweise in der EP 2 535 237 A1 offenbart. Erfindungsgemäß kann auf diese Elemente verzichtet werden und somit eine vereinfachte Konstruktion der Vorrichtung zum Abdämpfen von Druckkraft realisiert werden.

Gemäß einer Weiterbildung des zuletzt genannten Aspekts der Erfindung weist der innere Zylinder im Bereich außerhalb des hinteren Endbereichs einen gleichmäßigen Innendurchmesser auf.

Hierdurch wird sichergestellt, dass keine Bauteile wie Endstopfen, Prallplatte, Drahtring und/oder Dichtungselemente notwendig sind, da der innere Zylinder einen ausreichenden Zugang im vorderen Endbereich aufweist. Dieser Zugang ist dadurch gewährleistet, dass der innere Zylinder im vorderen Endbereich keinen reduzierten Innendurchmesser aufweist, sondern einen über die ganze Länge (bis auf den hinteren Endbereich) gleichmäßigen Innendurchmesser aufweist. Hierdurch kann beispielsweise ein Element im vorderen Endbereich des inneren Zylinders in den inneren Zylinder eingebracht werden, was bei einer Vorrichtung, die bisher verwendet wurde, nicht möglich war. Dadurch, dass ein solches Element nicht über den hinteren Endbereich in den Zylinder eingebracht werden muss, kann der hintere Endbereich demnach erfindungsgemäß einstückig ausgebildet werden.

Gemäß einem weiteren Aspekt der vorliegenden Erfindung ist im vorderen Endbereich des inneren Zylinders eine Ventilanordnung ausgebildet, die eine im äußeren Zylinder ausgebildete Hydraulikkammer in eine hintere Hydraulikkammer und eine vordere Hydraulikkammer unterteilt.

Eine derartige Ventilanordnung ist bereits im Detail aus der EP 2 535 237 A1 bekannt und dient dazu, sowohl statische als auch dynamische Belastungen des Dämpfers geeignet abzudämpfen. Genauer ist hierbei vorgesehen, einen Drosseldorn am Zylinder in dessen Mittelachse derart zu befestigen, dass dieser Drosseldorn in den Überströmbereich der Ventilanordnung hineinragt. In diesem Verbindungsbereich zwischen der hinteren Hydraulikkammer und dem Überströmbereich wird demnach ein Drosselspalt, in der Regel ein ringförmiger Drosselspalt, ausgebildet. Aus der hinteren Hydraulikkammer verdrängte Hydraulikflüssigkeit strömt somit durch diesen zwischen dem Drosseldorn und einem Überströmbereich gebildeten Drosselspalt, wobei der resultierende Druckabfall primär vom Spaltquerschnitt abhängt. Dringt der innere Zylinder weiter in den äußeren Zylinder ein, verschiebt sich infolgedessen auch die am Endbereich des innere Zylinders ausgebildete Ventilanordnung weiter in den äußeren Zylinder hinein, wodurch der Drosseldorn tiefer in den Überströmbereich der Ventilanordnung eindringt. Durch eine speziell angepasste Formgebung des Drosseldorns verringert sich der Querschnitt des Drosselspaltes beim Eindringen des Drosseldornes, d.h. der Spaltquerschnitt des Drosselspaltes wird umso kleiner, je tiefer der Drosseldorn in den Überströmbereich der Ventilanordnung eindringt.

Durch diese konstruktive Maßnahme wird der Tatsache Rechnung getragen, dass während eines Stoßabsorptionsvorganges durch die Vorrichtung zum Abdämpfen (Dämpfungsvorrichtung) infolge der Energieabsorption die Relativgeschwindigkeit der aufeinanderstoßenden Fahrzeuge über den zeitlichen Verlauf des Stoßvorganges abnimmt. Während eines solchen Stoßvorganges reduziert sich daher durch das Abbremsen der Fahrzeugmassen auch die Eindrückgeschwindigkeit, d.h. die Einfederungsgeschwindigkeit des Dämpfers. Neben der Abhängigkeit von weiteren Größen lassen sich die dabei auftretenden hydraulischen Kräfte als Funktion aus dem Drosselspaltquerschnitt und der Eindrückgeschwindigkeit, d.h. Einfederungsgeschwindigkeit der Dämpfungsvorrichtung beschreiben. Dadurch, dass der Drosseldorn ausgebildet ist, durch seine Formgebung den Drosselspaltquerschnitt abhängig von seiner Eindringtiefe in den Überströmbereich der Ventilanordnung zu verringern, kann durch die während des Einfedervorganges abnehmende Geschwindigkeit, mit welcher der Drosseldorn in den Überströmbereich eindringt, die auftretende hydraulische Kraft weitestgehend konstant gehalten werden. Gleichzeitig sorgt die Kombination mit dem exzentrisch angeordneten Multiplikatorventil dafür, dass sich auch in diesem Fall der Kombination mit einem Drosseldorn bei einfacher Anordnung und geringem Bauvolumen gleichsam eine vorteilhafte statische Kennlinie der Dämpfungsvorrichtung ergibt.

Gemäß einem weiteren Aspekt der Erfindung ist innerhalb des inneren Zylinders ein Trennkolben derart ausgebildet, dass ein gasdichter Bereich im hinteren Bereich des inneren Zylinders ausgebildet ist.

Ein derartiger Trennkolben dient dazu, einen Bereich im inneren Zylinder zu schaffen, der vorzugsweise über das Gasventil mit Gas versorgt wird und somit zur (pneumatischen) Dämpfung verwendet wird. Am Trennkolben sind vorzugsweise Dichtungen derart ausgebildet, dass weder Gas noch Flüssigkeit innerhalb des inneren Zylinders am Trennkolben vorbeiströmen kann. Somit kann der dem gasdichten Bereich gegenüberliegende Bereich des inneren Zylinders, der durch den Trennkolben vom gasdichten Bereich getrennt ist, verwendet werden um beispielsweise Hydraulikflüssigkeit aufzunehmen. Vorteilhafterweise trennt der Trennkolben somit einen gasdichten Bereich von der hinteren Hydraulikkammer ab.

Gemäß einem weiteren Aspekt der Erfindung ist der äußere Umfangsbereich des inneren Zylinders hart verchromt.

Durch diese Hartverchromung wird dem Umstand Rechnung getragen, dass die an der Buchse angeordneten Dichtung bzw. Dichtungen, die an der Buchse angeordnet ist/sind, in Kontakt mit dem äußeren Umfangsbereich des inneren Zylinders tritt/treten, wenn der innere Zylinder im Bereich innerhalb der Buchse und des äußeren Zylinders bei einem Dämpfungsvorgang verschoben wird. In diesem Fall wird die Dichtung bzw. die Dichtungen, die an der Buchse angeordnet ist/sind über den äußeren Umfangsbereich des inneren Zylinders bewegt. Daher ist vorteilhafter Weise vorgesehen, dass dieser Bereich des inneren Zylinders hart verchromt ist, um einen Verschleiß der Dichtung bzw. der Dichtungen zu verringern bzw. zu vermeiden.

Nachfolgend wird die Erfindung unter Bezugnahme auf die beiliegenden Zeichnungen anhand exemplarischer Ausführungsformen der erfindungsgemäßen Pulverdichtstrompumpe näher beschrieben.

In den Zeichnungen zeigen:
- Fig. 1:: eine schematische Schnittansicht der erfindungsgemäßen Vorrichtung zum Abdämpfen von Druckkräften;
- Fig. 2:: eine schematische Schnittansicht einer bereits bekannten Vorrichtung zum Abdämpfen von Druckkräften.

Fig. 2 zeigt eine Vorrichtung, die beispielhaft für bereits bekannte Vorrichtungen zum Abdämpfen von Druckkräften steht, bei der ein äußerer Zylinder 1' derart angeordnet ist, dass ein innerer Zylinder 2' innerhalb des äußeren Zylinders 1' gleiten kann. Die Vorrichtung besteht im Wesentlichen aus einem äußeren Zylinder 1' und einem darin teleskopartig entlang einer Mitten-Längsachse 4' verschiebbar angeordneten inneren Zylinder 2'. In einem vorderen Endbereich des inneren Zylinders 2' ist eine Ventilanordnung 12' angeordnet, welche eine innerhalb des äußeren Zylinders 1' ausgebildete Hydraulikkammer 13' in einen hinteren Hydraulikkammerbereich 13.2' und einen vorderen Hydraulikkammerbereich 13.1' unterteilt. Somit erstreckt sich die Hydraulikkammer 13' zumindest teilweise in den inneren Zylinder 2' hinein; mit anderen Worten ist der vordere Hydraulickammerbereich 13.1' innerhalb des inneren Zylinders 2' ausgebildet.

Ein Trennkolben 14' trennt den vorderen Hydraulikkammerbereich 13.1' von einem innerhalb des inneren Zylinders 2' ausgebildeten Gasraum 15'. Der Gasraum 15' kann über ein Füllventil 10' mit unter Druck stehenden Füllgas befüllt werden. Der Trennkolben 14' weist Dichtungselemente auf und ist entlang der Mitten-Längsachse 4' beweglich angeordnet. Eine Volumenzunahme im vorderen Hydraulikkammerbereich 13.1', beispielsweise durch Einströmen von Hydraulikflüssigkeit aus dem hinteren Hydraulikkammerbereich 13.2' in den Hydraulikkammerbereich 13.1', bewirkt somit ein Verschieben des Trennkolbens 14' in den Gasraum 15', wobei das Füllgas hierdurch komprimiert wird.

Ein Drosseldorn 17' ist im hinteren Hydraulikkammerbereich 13.2' der Hydraulickammer 13' ausgebildet und in der Mitten-Längsachse 4' des äußeren Zylinders 1' befestigt. In dem in Fig. 2 dargestellten Zustand der Vorrichtung ragt der Drosseldorn 17' teilweise in einen Überströmbereich der Ventilanordnung 12' dergestalt hinein, dass zwischen dem Drosseldorn 17' und dem Überströmbereich ein Drosselspalt ausgebildet wird. Hydraulikflüssigkeit, welche aus dem hinteren Hydraulikkammerbereich 13.2' in den Überströmbereich strömt, wird durch den Druckabfall an dem Durchlass begrenzenden Drosselspalt während des Überströmens gedrosselt. Das Gehäuse der Ventilanordnung 12' ist mit dem Endbereich des inneren Zylinders 2' verbunden. Bei einem Kompressionsvorgang wird der innere Zylinder 2' durch Einwirken von äußeren Kräften entlang der in die Längsrichtung darstellenden Mitten-Längsachse 4' in den äußeren Zylinder 2' hinein verschoben. Demgemäß bewegt sich auch die am inneren Zylinder 2' befestigte Ventilanordnung 12' weiter in den äußeren Zylinder 1', also den hinteren Hydraulikkammerbereich 13.2', hinein. Hierdurch entsteht ein Überdruck im hinteren Hydraulikkammerbereich 13.2' und bei geringen Betätigungsgeschwindigkeiten, also bei quasistatischem Einfedern, stellt sich der gleiche Überdruck im Überströmbereich der Ventilanordnung 12' ein. Über mindestens einen Kanal dieses Überströmbereichs ist ein exzentrisch angeordneter Hydraulikraum mit dem Überströmbereich der Ventilanordnung 12' verbunden, so dass auch in diesem exzentrischen Hydraulikraum in diesem quasi statischen Fall der gleiche Überdruck wie im hinteren Hydraulikkammerbereich 13.2' der Hydraulikkammer 13' vorliegt. Dieser exzentrische Hydraulikraum wird mittels eines Multiplikatorventils mit dessen Eingangsseite verschlossen. Auf der Ausgangsseite des Multiplikatorventils wirkt der Druck, der im vorderen Hydraulikkammerbereich 13.1' der Hydraulikkammer 13' herrscht.

Bei genügend großem Druck, d.h. bei einem entsprechend ausreichenden Druckverhältnis zwischen dem Druck im exzentrischen Hydraulikraum und dem Druck im vorderen Hydraulikkammerbereich 13.1' öffnet das Multiplikatorventil und erlaubt ein Überströmen von Hydraulikflüssigkeit aus dem Überströmbereich durch den Kanal und den exzentrischen Hydraulikraum in den vorderen Hydraulikkammerbereich 131.1'.

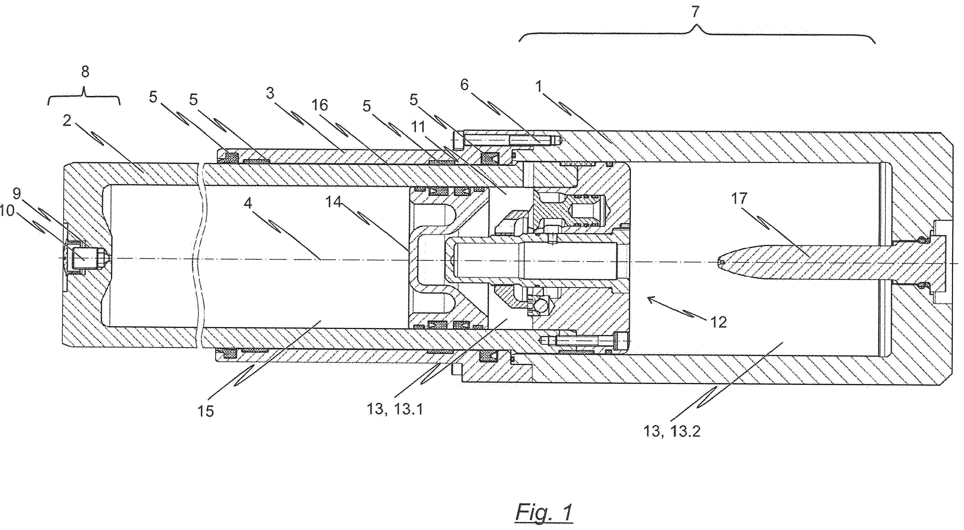

Fig. 1 zeigt nun die erfindungsgemäße Vorrichtung zum Abdämpfen von Drucckräften, bei der eine Buchse 3 vorgesehen ist. Die Buchse 3 kann über eine Schraubverbindung 6 mit dem äußeren Zylinder 1 verbunden werden. Denkbar ist natürlich auch, dass die Buchse 3 über eine andere Verbindung mit dem äußeren Zylinder 1 verbunden wird.

Anders als die in Fig. 2 gezeigte Vorrichtung erstreckt sich der äußere Zylinder 1 nur über einen relativ kleinen Teil des inneren Zylinders 2. Die Buchse 3 erstreckt sich über einen größeren Teil des inneren Zylinders 2 und sorgt somit für eine Führung des inneren Zylinders 2 innerhalb des äußeren Zylinders 1 bzw. der Buchse 3.

Die Buchse 3 ist vorzugsweise zumindest teilweise zylinderförmig ausgebildet, wobei die Buchse 3 noch bevorzugter genau so ausgebildet ist, dass sie genau passend bezüglich des inneren Zylinders 2 ausgebildet ist, so dass der innere Zylinder 2 im Innenbereich der Buchse 3 verschiebbar ist. Vorzugsweise ist die Buchse 3, der innere Zylinder 2 sowie der äußere Zylinder zumindest bereichsweise kreiszylinderförmig ausgebildet.

Außerdem weist die Buchse 3 zumindest eine Dichtung 5 auf, die dazu ausgelegt ist, einen Übertritt von Hydraulikflüssigkeit aus der vorderen Hydraulikkammer 13.1 bzw. der hinteren Hydraulikkammer 13.2 in die Umgebung zu verhindern. Die erfindungsgemäße Dichtung 5 ist an der Buchse 3 angeordnet und steht mit dem äußeren Umfangsbereich des inneren Zylinders 2 in Verbindung. Im Gegensatz hierzu ist bei der bekannten Vorrichtung vorgesehen, eine Dichtung 5' derart an dem inneren Zylinder 2' bzw. der Ventilanordnung 12' anzubringen, das diese Dichtung(en) mit der inneren Oberfläche des äußeren Zylinders 10' in Berührung tritt. Somit musste bei der bekannten Vorrichtung die innere Oberfläche des äußeren Zylinders 1 von hoher Güte sein, um einen Verschleiß zu minimieren. Die erfindungsgemäße Dichtung 5 an der Buchse 3 ermöglicht, dass nunmehr die innere Oberfläche des äußeren Zylinders 1 nicht mehr von derart hoher Güte sein muss.

Vorzugsweise ist lediglich die äußere Oberfläche des inneren Zylinders 2 von hoher Güte, um einen Verschleiß der Dichtung 5 zu reduzieren. Eine derartig hohe Güte kann relativ leicht erreicht werden, da die äußere Oberfläche des inneren Zylinders 2 daher leicht bearbeitet werden kann, da sie leicht von außen zu erreichen ist und nicht wie der innere Zylinder von innen bearbeitet werden muss. Außerdem kann die Dichtung 5 leicht ersetzt werden, da die Buchse 3 lösbar mit dem äußeren Zylinder 1 verbunden ist und insbesondere leicht von dem äußeren Zylinder 1 gelöst werden kann. Hierdurch wird eine Wartung der Buchse 3 bzw. der Dichtung 5 vereinfacht.

Außerdem und wie in Fig. 1 gezeigt, kann die Buchse 3 verwendet werden, um den inneren Zylinder 2 innerhalb des äußeren Zylinders 1 bzw. innerhalb der Buchse 3 zu sichern. Eine derartige Sicherung kann dadurch sichergestellt werden, dass die Buchse 3 zumindest bereichsweise über einen Durchmesser verfügt, der kleiner ist als ein Durchmesser eines vorderen Endbereichs des inneren Zylinders 2. In Fig. 1 dargestellt weist der innere Zylinder 2 im vorderen Endbereich eine Verdickung auf, wobei die Buchse 3 einen Durchmesser aufweist, der im Wesentlichen des Durchmessers des inneren Zylinders 2 in einem mittleren Bereich des inneren Zylinders 2 entspricht.

Hierdurch wird vermieden, dass, wie bei bekannten Vorrichtungen wie in Fig. 2 gezeigt, beispielsweise ein Drahtring 18 notwendig ist, der zwischen dem inneren Zylinder 2' und dem äußeren Zylinder 1' angeordnet ist, um ein Herausgleiten des inneren Zylinders 2' aus dem äußeren Zylinder 1' zu verhindern.

Erfindungsgemäß ist weiterhin vorgesehen, dass im Unterschied zur bekannten Vorrichtung wie in Fig. 2 gezeigt der Innendurchmesser des inneren Zylinders bis auf einen Bereich im hinteren Endbereich des inneren Zylinders gleichgroß ist.

Somit kann gewährleistet werden, dass ein Zugang zum inneren Zylinder im vorderen Endbereich des inneren Zylinders 2 so groß ist, dass beispielsweise ein Trennkolben 14 in den vorderen Endbereich des inneren Zylinders 2 eingeschoben werden kann. Die geschieht bei der Montage der Vorrichtung zum Abdämpfen von Druckkräften und sorgt dafür, dass im hinteren Endbereich 8 des inneren Zylinders 2 eine wesentliche konstruktive Vereinfachung im Vergleich zu bekannten Vorrichtungen ermöglicht wird.

Genauer besteht der erfindungsgemäße hintere Endbereich 8 der vorliegenden Vorrichtung im Wesentlichen aus einem Stück. Lediglich eine Gewindebohrung 9 ist vorgesehen, um ein Gasventil 10 in eben diese Gewindebohrung 9 einsetzen zu können. Das Gasventil 10 wird benutzt, um Gas in einen gasdichten Bereich 15 im hinteren Bereich des inneren Zylinders 2 einbringen zu können. Ansonsten ist der hintere Endbereich 8 der Vorrichtung geschlossen und einstückig ausgebildet.

Im Gegensatz hierzu ist die bereits bekannte Vorrichtung wesentlich aufwendiger. In einem hinteren Endbereich 8', wie in Fig. 2 gezeigt, ist zusätzlich zur Gewindebohrung 9' und zusätzlich zum Gasventil 10' ein Endstopfen 8.1, eine Prallplatte 8.2, ein Drahtring 8.3 und Dichtungselement 8.4 notwendig. Diese Elemente sind notwendig, da der Innendurchmesser des inneren Zylinders 2' nicht gleichmäßig ist, und somit ein Trennkolben 14' bei der Montage über den hinteren Endbereich 8' in den inneren Zylinder 2' eingebracht werden muss. Im Gegensatz hierzu ist das Einbringen eines Trennkolbens 14 bei der erfindungsgemäßen Vorrichtung einfach über den vorderen Endbereich 11 des inneren Zylinders 2 möglich und der hintere Endbereich 8 des inneren Zylinders 2 kann einfach einstückig ausgebildet sein.

Die Erfindung ist nicht auf die in den Zeichnungen dargestellten Ausführungsformen der erfindungsgemäßen Vorrichtung zum Abdämpfen von Druckkräften beschränkt sondern ergibt sich aus einer Zusammenschau sämtlich hierin offenbarter Merkmale.

### Bezugszeichenliste

- 1, 1': äußerer Zylinder
- 2, 2': innerer Zylinder
- 3: Buchse
- 4, 4': Mitten-Längsachse
- 5, 5': Dichtung
- 6: Schraubverbindung
- 7: Länge (des Verschieb-Bereichs)
- 8, 8': hinterer Endbereich des inneren Zylinders
- 8.1: Endstopfen
- 8.2: Prallplatte
- 8.3: Drahtring
- 8.4: Dichtungselemente
- 9, 9': Gewindebohrung
- 10, 10': Gasventil
- 11, 11': vorderer Endbereich des inneren Zylinders
- 12, 12': Ventilanordnung
- 13, 13': Hydraulikkammer
- 13.1, 13.1': hintere Hydraulikkammer
- 13.2, 13.2': vordere Hydraulikkammer
- 14, 14': Trennkolben
- 15, 15': gasdichter Bereich
- 16: äußerer Umfangsbereich des inneren Zylinders
- 17, 17': Drosseldorn
- 18: Drahtring

## Patentansprüche

1. Gashydraulische Vorrichtung zum Abdämpfen von Druckkräften, wobei die Vorrichtung folgendes aufweist:
- einen äußeren Zylinder (1);
- einen inneren Zylinder (2), der verschiebbar innerhalb des äußeren Zylinders (1) angeordnet ist, wobei im vorderen Endbereich (11) des inneren Zylinders eine Ventilanordnung (12) derart ausgebildet ist, dass eine im äußeren Zylinder (1) ausgebildete Hydraulikkammer (13) in eine hintere Hydraulikkammer (13.1) und eine vordere Hydraulikkammer (13.2) unterteilt ist; und
- eine Buchse (3), die mit dem äußeren Zylinder (1) verbindbar ist und derart ausgebildet ist, dass der innere Zylinder (2) innerhalb eines Bereichs, der durch die Buchse (3) und durch den mit der Buchse (3) verbindbaren äußeren Zylinder (1) gebildet wird, verschiebbar ist in Richtung einer Mitten-Längsachse (4) der Vorrichtung,
wobei das Volumen, das von dem inneren Zylinder (2), dem äußeren Zylinder (1) und der Buchse (3) umschlossen ist, einen Arbeitshub der Vorrichtung festlegt, der proportional zur maximalen Energieaufnahme der Vorrichtung ist,
wobei das Volumen durch die Buchse (3) variierbar ist, und
wobei sich der äußere Zylinder (1) nur über einen ersten Teil des inneren Zylinders (2) erstreckt und wobei sich die Buchse (3) über einen zweiten Teil des inneren Zylinders (2) erstreckt und somit für eine Führung des inneren Zylinders (2) innerhalb des äußeren Zylinders (1) bzw. der Buchse (3) sorgt, wobei der erste Teil des inneren Zylinders (2) kleiner als der zweite Teil des inneren Zylinders (2) ist.

2. Vorrichtung nach Anspruch 1,
wobei durch die Buchse (3) die Verschieb-Bewegung des inneren Zylinders (2) geführt wird.

3. Vorrichtung nach Anspruch 1 oder 2,
wobei an der Buchse (3) mindestens eine Dichtung (5) derart ausgebildet und angeordnet ist, dass Hydraulikflüssigkeit nicht zwischen dem inneren Zylinder (2) und der Buchse (3) durchströmen kann.

4. Vorrichtung nach einem der Ansprüche 1 bis 3,
wobei die Buchse (3) derart mit dem äußeren Zylinder (1) verbindbar ist, dass im verbundenen Zustand der Buchse (3) mit dem äußeren Zylinder (1) die Buchse (3) als Sicherung für den inneren Zylinder (2) dient derart, dass der innere Zylinder (2) nicht aus dem Bereich innerhalb der Buchse (3) und des äußeren Zylinders (1) herausschiebbar ist.

5. Vorrichtung nach einem der Ansprüche 1 bis 4,
wobei die Buchse (3) durch eine Schraubverbindung (6) mit dem äußeren Zylinder (1) verbindbar ist.

6. Vorrichtung nach einem der Ansprüche 1 bis 5,
wobei die Buchse (3) derart ausgebildet ist, dass die Länge (7) des Bereichs, in dem der innere Zylinder (2) innerhalb der Buchse (3) und des äußeren Zylinders (2) verschiebbar ist bzgl. der Mitten-Längsachse (4) der Vorrichtung, durch die Buchse (3) festgelegt ist.

7. Vorrichtung nach Anspruch 6,
wobei der innere Zylinder (2) einen hinteren Endbereich (8) aufweist, der einstückig ausgebildet ist und bis auf eine Gewindebohrung (9) für ein Gasventil (10) geschlossen ist.

8. Vorrichtung nach einem der Ansprüche 1 bis 7,
wobei der innere Zylinder (2) bis auf den hinteren Endbereich (8) einen gleichmäßigen Innendurchmesser aufweist.

9. Vorrichtung nach einem der Ansprüche 1 bis 8,
wobei innerhalb des inneren Zylinders (2) ein Trennkolben (14) derart ausgebildet ist, dass ein gasdichter Bereich (15) im hinteren Bereich des inneren Zylinders (2) ausgebildet ist.

10. Vorrichtung nach einem der Ansprüche 1 bis 9,
wobei der äußere Umfangsbereich (16) des inneren Zylinders (2) hartverchromt ist.

## Claims

1. A gas-hydraulic device for damping compressive forces, wherein the device comprises the following:
- an outer cylinder (1);
- an inner cylinder (2) displaceably disposed within the outer cylinder (1), wherein a valve assembly (12) is configured in the front end region (11) of the inner cylinder such that a hydraulic chamber (13) configured in the outer cylinder (1) is divided into a rear hydraulic chamber (13.1) and a front hydraulic chamber (13.2); and
- a sleeve (3) which is connectable to the outer cylinder (1) and configured such that the inner cylinder (2) is displaceable toward a center longitudinal axis (4) of the device within an area formed by the sleeve (3) and by the outer cylinder (1) connectable to the sleeve (3),
wherein the volume enclosed by the inner cylinder (2), the outer cylinder (1) and the sleeve (3) defines a working stroke of the device which is proportional to the maximum energy consumption of the device,
wherein the volume is variable by means of the sleeve (3), and
wherein the outer cylinder (1) only extends over a first part of the inner cylinder (2),
**characterized in that**
the sleeve (3) extends over a second part of the inner cylinder (2) and thus provides guidance for the inner cylinder (2) within the outer cylinder (1) or sleeve (3) respectively, wherein the first part of the inner cylinder (2) is smaller than the second part of the inner cylinder (2).

2. The device according to claim 1,
wherein the sliding motion of the inner cylinder (2) is guided by the sleeve (3).

3. The device according to claim 1 or 2,
wherein at least one seal (5) is configured and arranged on the sleeve (3) such that hydraulic fluid cannot flow between the inner cylinder (2) and the sleeve (3).

4. The device according to one of claims 1 to 3,
wherein the sleeve (3) is connectable to the outer cylinder (1) such that in the connected state of the sleeve (3) to the outer cylinder (1), the sleeve (3) serves as a securing element for the inner cylinder (2) such that the inner cylinder (2) cannot slide out of the area within the sleeve (3) and the outer cylinder (1).

5. The device according to one of claims 1 to 4,
wherein the sleeve (3) is connectable to the outer cylinder (1) by means of a bolted connection (6).

6. The device according to one of claims 1 to 5,
wherein the sleeve (3) is configured such that the length (7) of the area in which the inner cylinder (2) is displaceable within the sleeve (3) and the outer cylinder (2) relative to the center longitudinal axis (4) of the device is defined by the sleeve (3).

7. The device according to claim 6,
wherein the inner cylinder (2) comprises a rear end region (8) which is integrally formed and closed except for a threaded hole (9) for a gas valve (10).

8. The device according to one of claims 1 to 7,
wherein apart from the rear end region (8), the inner cylinder (2) exhibits a uniform internal diameter.

9. The device according to one of claims 1 to 8,
wherein a separating piston (14) is configured within the inner cylinder (2) such that a gas-tight region (15) is formed in the rear area of the inner cylinder (2).

10. The device according to one of claims 1 to 9,
wherein the outer peripheral region (16) of the inner cylinder (2) is chromium-plated.

## Revendications

1. Dispositif hydraulique à gaz pour amortir des forces de pression, le dispositif comprenant :
- un cylindre extérieur (1) ;
- un cylindre intérieur (2) agencé mobile en translation à l'intérieur du cylindre extérieur (1), un ensemble de vanne (12) étant réalisé dans la zone d'extrémité avant (11) du cylindre intérieur de telle sorte qu'une chambre hydraulique (13) réalisée dans le cylindre extérieur (1) est subdivisée en une chambre hydraulique arrière (13.1) et en une chambre hydraulique avant (13.2) ; et
- une douille (3) qui est susceptible d'être reliée au cylindre extérieur (1) et qui est réalisée de telle sorte que le cylindre intérieur (2) est mobile en translation en direction d'un axe longitudinal médian (4) du dispositif à l'intérieur d'une zone qui est formée par la douille (3) et par le cylindre extérieur (1) susceptible d'être relié à la douille (3),
dans lequel
le volume enfermé par le cylindre intérieur (2), par le cylindre extérieur (1) et par la douille (3) définit une course de travail du dispositif qui est proportionnelle à l'absorption maximale d'énergie du dispositif,
le volume est variable par la douille (3), et
le cylindre extérieur (1) ne s'étend que sur une première partie du cylindre intérieur (2),
**caractérisé en ce que**
la douille (3) s'étend sur une seconde partie du cylindre intérieur (2) et assure ainsi un guidage du cylindre intérieur (2) à l'intérieur du cylindre extérieur (1) ou de la douille (3), la première partie du cylindre intérieur (2) étant plus petite que la seconde partie du cylindre intérieur (2).

2. Dispositif selon la revendication 1,
dans lequel
le mouvement de translation du cylindre intérieur (2) est guidé par la douille (3).

3. Dispositif selon la revendication 1 ou 2,
dans lequel
au moins un joint d'étanchéité (5) est réalisé et agencé au niveau de la douille (3) de telle sorte qu'un liquide hydraulique ne peut pas passer entre le cylindre intérieur (2) et la douille (3).

4. Dispositif selon la revendication 1 ou 2,
dans lequel
la douille (3) est susceptible d'être reliée au cylindre extérieur (1) de telle sorte que dans l'état relié de la douille (3) au cylindre extérieur (1), la douille (3) sert de blocage pour le cylindre intérieur (2) de telle sorte que le cylindre intérieur (2) ne peut pas être extrait de la zone à l'intérieur de la douille (3) et du cylindre extérieur (1).

5. Dispositif selon l'une des revendications 1 à 4,
dans lequel
la douille (3) est susceptible d'être reliée au cylindre extérieur (1) par une liaison vissée (6).

6. Dispositif selon l'une des revendications 1 à 5,
dans lequel
la douille (3) est réalisée de telle sorte que la longueur (7) de la zone dans laquelle le cylindre intérieur (2) est mobile en translation à l'intérieur de la douille (3) et du cylindre extérieur (2), ou de l'axe longitudinal médian (4) du dispositif est fixée par la douille (3).

7. Dispositif selon la revendication 6,
dans lequel
le cylindre intérieur (2) présente une zone d'extrémité arrière (8) qui est réalisée d'un seul tenant et qui est refermée, exception faite d'un perçage taraudé (9) pour une soupape à gaz (10).

8. Dispositif selon l'une des revendications 1 à 7,
dans lequel
le cylindre intérieur (2) présente un diamètre intérieur régulier, exception faite de la zone d'extrémité arrière (8).

9. Dispositif selon l'une des revendications 1 à 8,
dans lequel
un piston de séparation (14) est réalisé à l'intérieur du cylindre intérieur (2) de telle sorte qu'une zone (15) étanche aux gaz est réalisée dans la zone arrière du cylindre intérieur (2).

10. Dispositif selon l'une des revendications 1 à 9,
dans lequel
la zone périphérique extérieure (16) du cylindre intérieur (2) est pourvu d'un revêtement de chrome dur.
